# EUROPEAN PATENT APPLICATION

(11) **EP 4 557 135 A1**
(43) Date of publication of application: **21.05.2025**
(21) Application number: 24199375.7
(22) Date of filing: 10.09.2024
(51) Int. Cl.: G06F 21/51, G06F 9/4401, G06F 21/57, G06F 21/55, H04L 9/40, H04W 12/12

(54) **INFORMATION PROCESSING APPARATUS, CONTROL METHOD, AND PROGRAM**

(30) Priority: 14.11.2023 JP 2023193416
(71) Applicant: Lenovo (Singapore) Pte. Ltd., Singapore 556741 (SG)
(72) Inventor: SHIBA, Kazuo, Yokohama-shi, 220-0012 (JP); SASAKI, Ken, Yokohama-shi, 220-0012 (JP); MORISHIGE, Yusaku, Yokohama-shi, 220-0012 (JP); NAKAMURA, Tetsuya, Yokohama-shi, 220-0012 (JP)
(74) Representative: Openshaw & Co.

(57) **Abstract**

Provided is an information processing apparatus to improve the protection against third party attacks in secure boot. The information processing apparatus includes: an authentication processing unit that confirms the validity of a startup program for booting an OS based on a security key in BIOS processing; a trust list storage unit that stores a trust list, a list of trustable providers of the startup program; a chain information storage unit that stores chain information indicating whether the startup program has been executed when the startup program is unauthorized; a startup processing unit that changes the chain information when the startup program acquired from a provider not included in the trust list has been executed in secure boot processing for executing the startup program whose validity has been confirmed by the authentication processing unit; and a restriction processing unit that restricts the use of security-related protocols when the chain information has been changed to information indicating that the unauthorized startup program has been executed.

## Description

### BACKGROUND OF THE INVENTION

### Field of the Invention

The present invention relates to an information processing apparatus, a control method, and a program.

### Description of the Related Art

In recent years, an information processing apparatus such as a personal computer has an implemented function called "secure boot" in the basic input output system (BIOS), the secure boot preventing a program that is not signed with a key registered in the system (secure boot key) from running, so that a third party is not able to tamper with or monitor the pre-boot environment before the operating system (OS) is started (see, for example, Japanese Unexamined Patent Application Publication No. 2017-146694) .

### SUMMARY OF THE INVENTION

In a conventional information processing apparatus, an information exchange between drivers, system information management, BIOS configuration setting, and the like are performed by means of a general-purpose interface whose protocols or the like are defined by the unified extensible firmware interface (UEFI) specification. The general-purpose interface, however, is a program that is present in a memory, and therefore may be rewritten by a third party program.

Moreover, some programs signed with a secure boot key may have vulnerabilities that allow someone to slip through the secure boot, so that even under the protection of secure boot, the programs may be tampered with by a third party. Therefore, in a conventional information processing apparatus, for example, when a program tampered with by a third party is executed in secure boot, the program executed thereafter may be tampered with or monitored.

The present invention was made to solve the above problem, and the object of the present invention is to provide an information processing apparatus, a control method, and a program capable of improving protection against third party attacks in secure boot.

To solve the above problem, an information processing apparatus according to the first aspect of the present invention includes: an authentication processing unit that confirms the validity of a startup program for booting an operating system (OS) based on a predetermined security key in basic input output system (BIOS) processing; a trust list storage unit that stores a trust list, a list of trustable providers of the startup program; a chain information storage unit that stores chain information indicating whether the startup program has been executed when the startup program is unauthorized because of being possibly tampered with; a startup processing unit that changes the chain information stored in the chain information storage unit to information indicating that the unauthorized startup program has been executed when the startup program acquired from a provider not included in the trust list stored in the trust list storage unit has been executed in secure boot processing for executing the startup program whose validity has been confirmed by the authentication processing unit; and a restriction processing unit that restricts the use of preset security-related protocols when the chain information stored in the chain information storage unit is information indicating that the unauthorized startup program has been executed.

Moreover, according to the first aspect of the present invention, in the above information processing apparatus, the trust list may include a firmware volume with a BIOS memory as a provider, where programs for the BIOS are stored, or a network boot with a preset server device as a provider.

Furthermore, according to the first aspect of the present invention, the information processing apparatus further may include a usage restriction list storage unit that stores a list of the protocols whose use is restricted, and the restriction processing unit may restrict the use of the protocols included in the list of the protocols stored in the usage restriction list storage unit when the chain information indicates that the unauthorized startup program has been executed.

Further, according to the first aspect of the present invention, in the above information processing apparatus, the list of the protocols whose use is restricted may include protocols related to network connection or protocols related to a trusted platform module (TPM).

According to the second aspect of the present invention, there is provided a control method for an information processing apparatus including: an authentication processing unit that confirms the validity of a startup program for booting an operating system (OS) based on a predetermined security key in basic input output system (BIOS) processing; a trust list storage unit that stores a trust list, a list of trustable providers of the startup program; and a chain information storage unit that stores chain information indicating whether the startup program has been executed when the startup program is unauthorized because of being possibly tampered with; the method including: a startup processing step in which a startup processing unit changes the chain information stored in the chain information storage unit to information indicating that the unauthorized startup program has been executed when the startup program acquired from a provider not included in the trust list stored in the trust list storage unit has been executed in secure boot processing for executing the startup program whose validity has been confirmed by the authentication processing unit; and a restriction processing step in which a restriction processing unit restricts the use of preset security-related protocols when the chain information stored in the chain information storage unit is information indicating that the unauthorized startup program has been executed.

According to the third aspect of the present invention, there is provided a program for causing a computer for an information processing apparatus including: an authentication processing unit that confirms the validity of a startup program for booting an operating system (OS) based on a predetermined security key in basic input output system (BIOS) processing; a trust list storage unit that stores a trust list, a list of trustable providers of the startup program; and a chain information storage unit that stores chain information indicating whether the startup program has been executed when the startup program is unauthorized because of being possibly tampered with, the program causing the computer to execute: a startup processing step in which the startup processing unit changes the chain information stored in the chain information storage unit to information indicating that the unauthorized startup program has been executed when the startup program acquired from a provider not included in the trust list stored in the trust list storage unit has been executed in secure boot processing for executing the startup program whose validity has been confirmed by the authentication processing unit; and a restriction processing step of restricting the use of preset security-related protocols when the chain information stored in the chain information storage unit is information indicating that the unauthorized startup program has been executed.

The above-described aspects of the present invention can increase the protection against third-party attacks in secure boot.

### BRIEF DESCRIPTION OF THE DRAWINGS

FIG. 1 is a diagram illustrating an example of the main hardware configuration of a laptop PC according to the present embodiment.
FIG. 2 is a functional block diagram illustrating an example of the functional configuration of an information processing system and the laptop PC according to the present embodiment.
FIG. 3 is a diagram illustrating example data for a trust list storage unit in the present embodiment.
FIG. 4 is a diagram illustrating example data for a restriction list storage unit in the present embodiment.
FIG. 5 is a flowchart illustrating an example of startup processing of the laptop PC according to the present embodiment.
FIG. 6 is a flowchart illustrating an example of protocol processing of the laptop PC according to the present embodiment.
FIG. 7 is a diagram for describing an example of a third party attack on a laptop PC of a conventional technique.
FIG. 8 is a first diagram for describing an advantageous effect of the laptop PC according to the present embodiment against the third party attack.
FIG. 9 is a diagram for describing another example of a third party attack on the laptop PC of the conventional technique.
FIG. 10 is a second diagram for describing an advantageous effect of the laptop PC according to the present embodiment against a third party attack.

### DETAILED DESCRIPTION OF THE INVENTION

An information processing apparatus and a control method according to one embodiment of the present invention are described below with reference to the drawings.

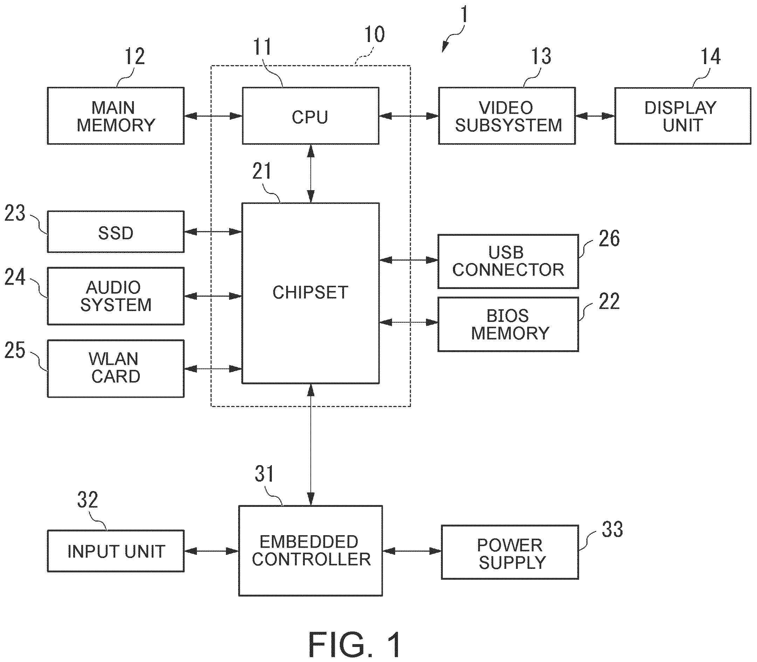

FIG. 1 is a diagram illustrating an example of the main hardware configuration of a laptop PC 1 according to the present embodiment. In the present embodiment, the laptop PC 1 is described as an example of the information processing apparatus.

As illustrated in FIG. 1, the laptop PC 1 has a central processing unit (CPU) 11, a main memory 12, a video subsystem 13, a display unit 14, a chipset 21, a BIOS memory 22, a solid state drive (SSD) 23, an audio system 24, a wireless local area network (WLAN) card 25, a universal serial bus (USB) connector 26, an embedded controller 31, an input unit 32, and a power circuit 33.

In the present embodiment, the CPU 11 and the chipset 21 correspond to a main control unit 10. The main control unit 10 is an example of a processor (main processor) that executes a program stored in a memory (the main memory 12).

The CPU 11 performs various arithmetic operations under program control and controls the entire laptop PC 1.

The main memory 12 is a writable memory that is used as a reading area of the execution program of the CPU 11 or as a working area to write processing data of the execution program. For example, the main memory 12 includes a plurality of dynamic random access memory (DRAM) chips. The execution program includes BIOS, OS, various drivers for hardware operations of peripherals, various services/utilities, application programs, and so on.

The video subsystem 13 is a subsystem to implement functions related to image display, and includes a video controller. The video controller processes drawing commands from the CPU 11, writes the processed drawing information into a video memory, reads the drawing information from the video memory, and outputs the drawing information as drawing data (display data) to the display unit 14.

The display unit 14, which is, for example, a liquid crystal display, displays a display screen based on the drawing data (display data) output from the video subsystem 13.

The chipset 21 has controllers such as a USB, a serial AT Attachment (ATA), a serial peripheral interface (SPI) bus, a peripheral component interconnect (PCI) bus, a PCI-Express bus, a low pin count (LPC) bus and the like, to which a plurality of devices is connected. In FIG. 1, as examples of devices, the BIOS memory 22, the SSD 23, the audio system 24, the WLAN card 25, and the USB connector 26 are connected to the chipset 21.

The BIOS memory 22 includes an electrically rewritable non-volatile memory such as an electrically erasable programmable read only memory (EEPROM) or a Flash ROM, for example. The BIOS memory 22 stores a BIOS, system firmware for controlling the embedded controller 31, and so on.

The SSD 23 (an example of a non-volatile memory) stores an OS, various drivers, various services/utilities, application programs, and various data.

The audio system 24 records, plays, and outputs sound data.

The WLAN card 25 connects to the network by wireless LAN and performs data communication.

The USB connector 26 is a connector for connecting peripherals using USBs.

The embedded controller 31 (an example of a sub-control unit) is a one-chip microcomputer that monitors and controls various devices (peripherals, sensors, and the like) regardless of the system status of the laptop PC 1. In addition, the embedded controller 31 has a power management function that controls the power circuit 33. The embedded controller 31 includes an unillustrated CPU, ROM, R_AM, and the like, and is equipped with A/D input terminals, D/A output terminals, timers, and digital input-output terminals for a plurality of channels. For example, the input unit 32, the power circuit 33, and the like are connected to the embedded controller 31 via those input-output terminals, and the embedded controller 31 controls the operations of the input unit 32, the power circuit 33, and the like.

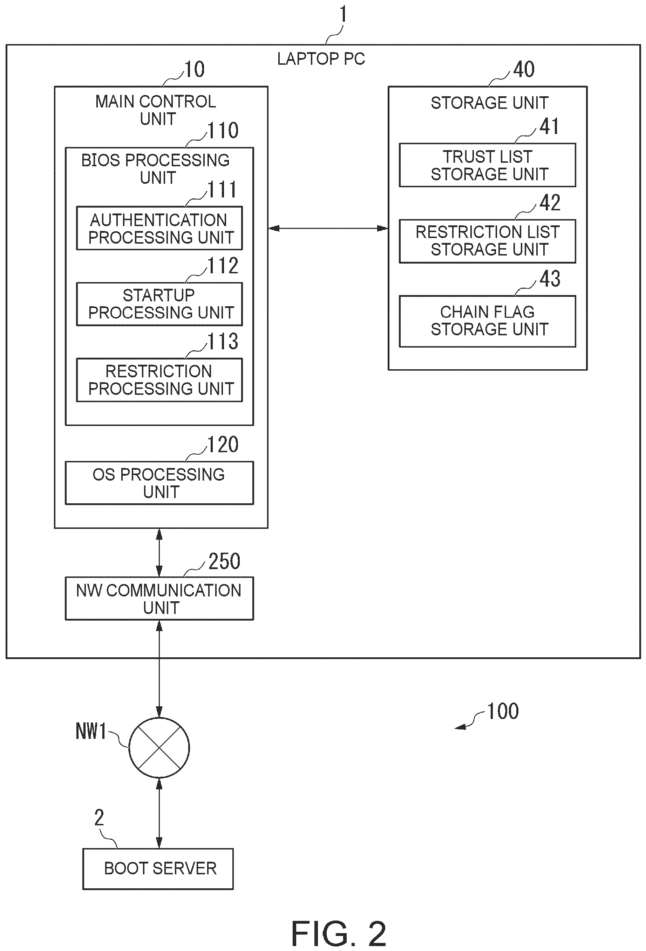

Subsequently, the functional configuration of the laptop PC 1 according to the present embodiment is described with reference to FIG. 2. FIG. 2 is a functional block diagram illustrating an example of the functional configuration of an information processing system 100 and the laptop PC 1 according to the present embodiment. In FIG. 2, among the functional configurations of the laptop PC 1, only the configurations related to the present invention are described.

As illustrated in FIG. 2, the information processing system 100 includes the laptop PC 1 and the boot server 2. The laptop PC 1 and the boot server 2 are allowed to be connected to each other via a network NW1.

The boot server 2 is a server device for network boot, for example, a server device to which the manufacturer of the laptop PC 1 provides various services. The boot server 2 provides the laptop PC 1 with the OS startup program for network boot via the network NW1.

Moreover, as illustrated in FIG. 2, the laptop PC 1 includes the main control unit 10, a storage unit 40, and a network (NW) communication unit 250.

The NW communication unit 250 is a functional unit implemented by a network device such as, for example, a WLAN card 25. The main control unit 10 is allowed to be connected to the network NW1 via the NW communication unit 250. In the present embodiment, the NW communication unit 250 is assumed to be connected to the network NW1 using wireless LAN (WiFi [registered trademark]) in description.

The storage unit 40 is implemented by a memory such as, for example, the BIOS memory 22 or the main memory 12, and stores various information used for various processes of the main control unit 10, for example. The storage unit 40 includes a trust list storage unit 41, a restriction list storage unit 42, and a chain flag storage unit 43.

The trust list storage unit 41 is implemented by the BIOS memory 22, for example, and stores a trust list that is a list of trustable providers of the startup program. The provider here means a device that is a source of execution (boot source) of the startup program. For example, the provider includes an Https boot, a USB device connected to the USB connector 26, an internal SSD 23, a firmware of the BIOS memory 22, and so on. The startup program is, for example, various UEFI programs that are executed when booting an OS (Windows [registered trademark] or the like). The trust list storage unit 41 stores a list of trustable devices as providers (boot sources).

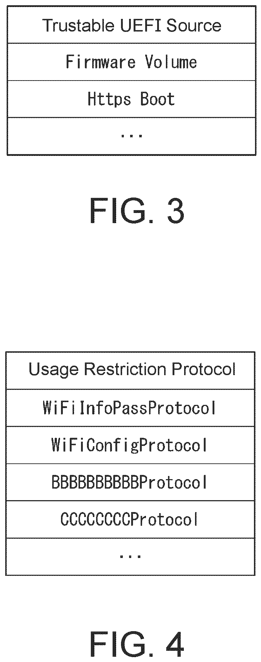

Here, example data for the trust list storage unit 41 is described with reference to FIG. 3.

FIG. 3 is a diagram illustrating the example data for the trust list storage unit 41 in the present embodiment.

In the example illustrated in FIG. 3, the trust list stored in the trust list storage unit 41 includes "Firmware Volume," "Https Boot," and the like as trustable UEFI sources.

Here, "Firmware Volume" indicates that the firmware in the BIOS memory 22 is a provider (boot source), and "Https Boot" indicates that, for example, that a network boot by the boot server 2 is a provider (boot source).

Returning to the description of FIG. 2, the restriction list storage unit 42 (an example of a usage restriction list storage unit), which is a storage unit implemented by, for example, the BIOS memory 22, stores a list of protocols to restrict usage. Here, the term "protocol" means a procedure and a rule defined for exchanging data with the laptop PC 1, an electrical regulation for signals, a standard that defines the procedures for transmission and reception in telecommunications. When the startup program (UEFI program) is executed from a provider (boot source) that is not in the trust list described above, the restriction list storage unit 42 stores a list of protocols to be restricted (prohibited) from being used in subsequent processes, as a usage restriction list. The usage restriction list includes protocols likely to compromise security such as, for example, protocols related to network connection, protocols related to a trusted platform module (TPM), and the like.

Here, example data for the restriction list storage unit 42 is described with reference to FIG. 4.

FIG. 4 is a diagram illustrating the example data for the restriction list storage unit 42 in the present embodiment.

In the example illustrated in FIG. 4, the usage restriction list stored in the restriction list storage unit 42 contains WiFiInfoPassProtocol, WiFiConfigProtocol, BBBBBBBBBBProtocol, CCCCCCCCCCProtocol, and so on, as the usage restriction protocols.

In the above, WiFiInfoPassProtocol is a protocol to pass a service set identifier (SSID) and a password of a wireless LAN. Moreover, WiFiConfigProtocol is a protocol to configure the connection settings of the wireless LAN.

Returning to the description of FIG. 2 again, the chain flag storage unit 43 (an example of the chain information storage unit) is a storage unit implemented by the system area of the main memory 12, for example. The chain flag storage unit 43 stores a boot chain flag (chain information) that indicates whether an unauthorized startup program that may have been tampered with has been executed. The boot chain flag stores information indicating the trust state (for example, "0") when, for example, an unauthorized startup program has not been executed, and information indicating the non-trust state (for example, "1") when the unauthorized startup program has been executed.

The main control unit 10 is a functional unit implemented by causing the CPU 11 and the chipset 21 to execute the programs stored in the BIOS memory 22 and the SSD 23, and performs various processes based on the BIOS and OS.

The main control unit 10 includes a BIOS processing unit 110 and an OS processing unit 120.

The BIOS processing unit 110 performs various processes based on BIOS (BIOS processing). The BIOS processing unit 110 includes an authentication processing unit 111, a startup processing unit 112, and a restriction processing unit 113

The authentication processing unit 111 confirms the validity of the startup program (for example, a UEFI program) for booting the OS on the basis of a predetermined security key in the processes of BIOS (BIOS processing). The authentication processing unit 111 confirms the validity of the startup program (for example, a UEFI program) by confirming the signature by the security key (for example, a secure boot key). The authentication processing unit 111 performs the authentication processing for secure boot described later.

The startup processing unit 112 performs various processes for booting the laptop PC 1 (OS) in the processes of BIOS (BIOS processing). The startup processing unit 112 performs the secure boot processing for executing the startup program whose validity is confirmed by the authentication processing unit 111.

When the startup program acquired from a provider that is not included in the trust list stored in the trust list storage unit 41 is executed in the secure boot processing, the startup processing unit 112 changes a boot chain flag stored in the chain flag storage unit 43 to information indicating that an unauthorized startup program has been executed.

The startup processing unit 112, for example, acquires the Device Path Class from the Device Path of the startup program (UEFI program) and confirms the provider of the startup program (UEFI program) on the basis of the Device Path Class. The startup processing unit 112 determines whether the confirmed provider is included in the trust list stored in the trust list storage unit 41. When the confirmed provider is not included in the trust list stored in the trust list storage unit 41, the startup processing unit 112 changes the boot chain flag stored in the chain flag storage unit 43 from the trust state (for example, "0") to the non-trust state (for example, "1").

When the boot chain flag stored in the chain flag storage unit 43 is information indicating that an unauthorized startup program has been executed (for example, the non-trust state "1"), the restriction processing unit 113 restricts the use of preset security-related protocols. The restriction processing unit 113 restricts the use of the protocols included in the list of protocols stored in the restriction list storage unit 42, for example, when the boot chain flag is information indicating that an unauthorized startup program has been executed (for example, the non-trust state "1"). The restriction processing unit 113, for example, prohibits the use of protocols included in the usage restriction list illustrated in FIG. 3.

The OS processing unit 120 is a functional unit that takes over the processing after the OS startup processing by the BIOS processing unit 110. The OS processing unit 120 performs various processes based on the OS.

Subsequently, the operation of the laptop PC 1 according to the present embodiment is described with reference to the drawings.

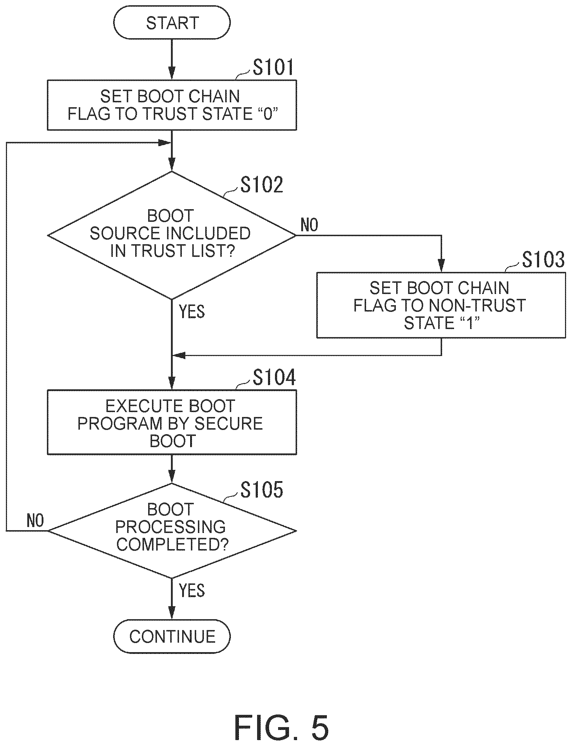

First, the startup processing of the laptop PC 1 according to the present embodiment is described with reference to FIG. 5. FIG. 5 is a flowchart illustrating an example of the startup processing of the laptop PC 1 according to the present embodiment.

As illustrated in FIG. 5, the BIOS processing unit 110 of the laptop PC 1 starts a power-on self-test (POST) process and sets the boot chain flag to the trust state "0" when the startup of the laptop PC 1 is started (step S101). The BIOS processing unit 110 stores the trust state "0" in the boot chain flag of the chain flag storage unit 43.

Subsequently, the startup processing unit 112 of the BIOS processing unit 110 determines whether a boot source (supplier) is included in the trust list (step S102). The startup processing unit 112 confirms the provider of the boot program (startup program) using the Device Path Class, and determines whether the confirmed provider is included in the trust list stored in the trust list storage unit 41. The startup processing unit 112 proceeds to step S104 when the boot source (supplier) is included in the trust list (step S102: YES). Moreover, when the boot source (supplier) is not included in the trust list (step S102: NO), the startup processing unit 112 determines that the unauthorized boot program has been executed and then proceeds to step S103.

In step S103, the startup processing unit 112 sets the boot chain flag to the non-trust state "1." In other words, the startup processing unit 112 stores the non-trust state "1" in the boot chain flag of the chain flag storage unit 43. After the processing of step S103, the process proceeds to step S104.

In step S104, the startup processing unit 112 executes the boot program by secure boot. The startup processing unit 112 confirms the validity of the boot program using the authentication processing unit 111, and performs the processing of the boot program whose validity is confirmed.

Then, the startup processing unit 112 determines whether the boot processing is completed (step S105). In other words, the startup processing unit 112 determines whether there is a boot program to be executed next. When the boot processing is completed (there is no boot program to be executed next) (step S105: YES), the startup processing unit 112 takes over the processing to the OS processing unit 120. When the boot processing is not completed (there is a boot program to be executed next) (step S105: NO), the startup processing unit 112 returns to step S102 and performs processing for the boot program to be executed next.

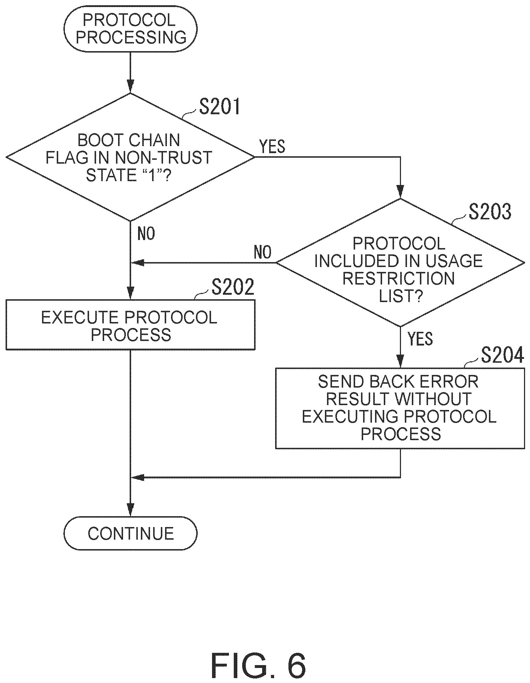

Subsequently, the protocol restriction processing of the laptop PC 1 is described with reference to FIG. 6.

FIG. 6 is a flowchart illustrating an example of the protocol processing of the laptop PC according to the present embodiment. The protocol processing here is, for example, InstallProtocol, LocalteProtocol, HandleProtocol, or the like of the UEFI specification.

As illustrated in FIG. 6, the restriction processing unit 113 of the BIOS processing unit 110 determines whether the boot chain flag is in the non-trust state "1" (step S201). The restriction processing unit 113 determines whether the boot chain flag of the chain flag storage unit 43 is in the non-trust state "1." When the boot chain flag is in the non-trust state "1" (step S201: YES), the restriction processing unit 113 proceeds to step S203. When the boot chain flag is not in the non-trust state "1" (trust state "0") (step S201: NO), the restriction processing unit 113 proceeds to step S202.

In step S202, the BIOS processing unit 110 executes the protocol process. For example, the BIOS processing unit 110 executes protocol processes such as InstallProtocol, LocalteProtocol, and HandleProtocol. After the processing of step S202, the BIOS processing unit 110 proceeds to the next process.

In step S203, the restriction processing unit 113 determines whether the protocol is included in the usage restriction list. The restriction processing unit 113 confirms the usage restriction list stored in the restriction list storage unit 42 and determines whether the process is included in the usage restriction list. When the process is included in the usage restriction list (step S203: YES), the restriction processing unit 113 proceeds to step S204. When the process is not included in the usage restriction list (step S203: NO), the restriction processing unit 113 returns to step S204.

In step S204, the restriction processing unit 113 send back (returns) an error result and does not execute the protocol process. After the processing of step S204, the restriction processing unit 113 proceeds to the next process.

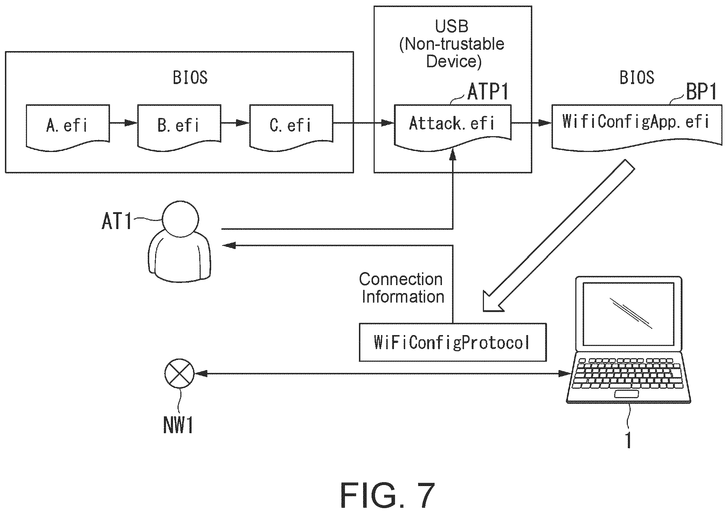

Subsequently, description is made on an attack example and an advantageous effect of the laptop PC 1 according to the present embodiment with reference to FIGS. 7 to 10.

FIG. 7 is a diagram for describing an example of a third party attack on a laptop PC of a conventional technique.

The example of the attack in FIG. 7 illustrates a case where a malicious third party, an attacker AT1, attempted to steal connection information by planting malware and tampering with the protocol before executing the Wifi Configuration App.

The attacker AT1 uses USB to cause the execution of the boot program ATP1 with malware called "Attack.efi" planted to tamper with the "WiFiConfigProtocol."

In the conventional laptop PC in FIG. 7, when a boot program BP1, "WifiConfigurationApp.efi" is executed subsequently by the BIOS, the attacker AT1 is able to steal the connection information of the wireless LAN by means of the "WiFiConfigProtocol" tampered with.

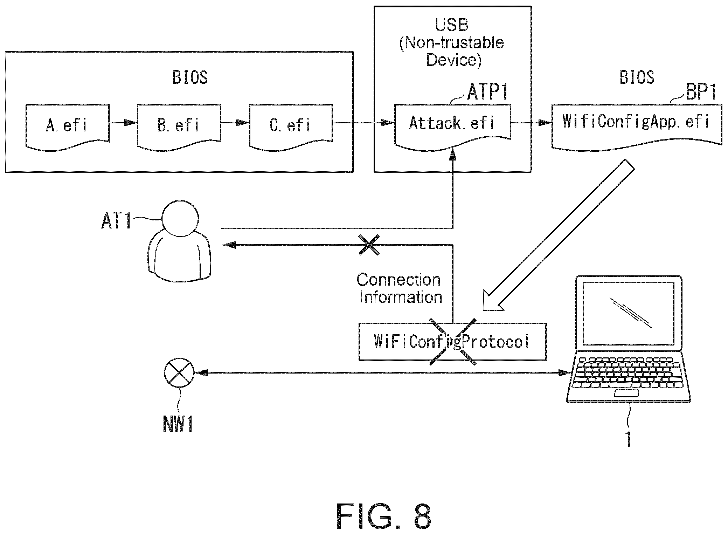

On the other hand, FIG. 8 is a first diagram for describing an advantageous effect of the laptop PC according to the present embodiment on a third party attack. In this specification, description is made on a case where the attacker AT1 performs the same attack on the laptop PC 1 according to the present embodiment as in FIG. 7 described above.

As illustrated in FIG. 8, in the laptop PC1 according to the present embodiment, when the boot program ATP1 named "Attack.efi" is executed from the USB, the USB is not on the trust list as a trustable supplier, for example, as illustrated in FIG. 3, and therefore the startup processing unit 112 changes the boot chain flag to the non-trust state "1."

Subsequently, when a boot program BP1, "WifiConfigurationApp.efi" is executed by the BIOS, the restriction processing unit 113 prohibits the use of "WiFiConfigProtocol" since "WiFiConfigProtocol" is included in the usage restriction list, for example, as illustrated in FIG. 4. Therefore, in the laptop PC 1 according to the present embodiment, the attacker AT1 is not able to steal the connection information of the wireless LAN.

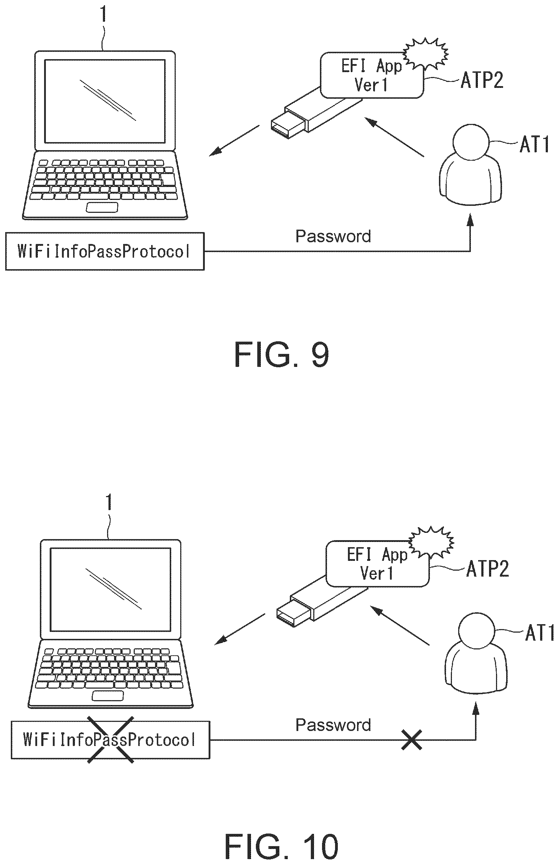

In addition, FIG. 9 is a diagram for describing another example of a third party attack on a laptop PC of a conventional technique.

The example of the attack in FIG. 9 illustrates a case where a third party with malicious intent, attacker AT1, caused execution of an old version of the boot program ATP2 called "EFIApp(Ver1)" with a password leakage bug found to attempt to steal a password by using "WiFiInfoPassProtocol."

The attacker AT1 is able to steal the password of wireless LAN by causing execution of the old version of the boot program ATP2 named "EFIApp(Ver1)" using the USB to execute "WiFiInfoPassProtocol."

On the other hand, FIG. 10 is a second diagram for describing an advantageous effect of the laptop PC according to the present embodiment on a third party attack. In this specification, description is made on a case where the attacker AT1 performs the same attack on the laptop PC 1 according to the present embodiment as in FIG. 9 described above.

As illustrated in FIG. 10, in the laptop PC 1 according to the present embodiment, when the boot program ATP2 named "EFIApp(Ver1)" is executed from the USB, the startup processing unit 112 changes the boot chain flag to the non-trust state "1" since the USB is not on the trust list as a trustable supplier, for example, as illustrated in FIG. 3.

Subsequently, the restriction processing unit 113 prohibits the use of "WiFiInfoPassProtocol" since "WiFiInfoPassProtocol" is included in the usage restriction list as illustrated in FIG. 4, for example. Therefore, in the laptop PC 1 according to the present embodiment, the attacker AT1 is not able to steal the password of the wireless LAN.

As described above, the laptop PC 1 (information processing apparatus) according to the present embodiment includes the authentication processing unit 111, the trust list storage unit 41, the chain flag storage unit 43 (a chain information storage unit), the startup processing unit 112, and the restriction processing unit 113. The authentication processing unit 111 confirms the validity of the boot program (startup program) for booting the OS on the basis of the predetermined security key in the BIOS process. The trust list storage unit 41 stores the trust list, which is a list of trustable providers of the boot program. The chain flag storage unit 43 stores chain information (for example, a boot chain flag) that indicates whether an unauthorized boot program that may have been tampered with has been executed. The startup processing unit 112 changes the boot chain flag stored in the chain flag storage unit 43 to information indicating that the unauthorized boot program has been executed (non-trust state "1"), when the boot program acquired from a provider not included in the trust list stored in the trust list storage unit 41 has been executed in the secure boot processing for executing the boot program whose validity is confirmed by the authentication processing unit 111. The restriction processing unit 113 restricts the use of preset security-related protocols in the case where the boot chain flag stored in the chain flag storage unit 43 is information indicating that an unauthorized boot program has been executed.

Thereby, the laptop PC 1 (information processing apparatus) according to the present embodiment is able to reduce the possibility, for example, even in the case where a program tampered with by a third party is executed in secure boot, that programs subsequently executed are tampered with or monitored (see FIGS. 8 and 10 described above). Therefore, the laptop PC 1 according to the present embodiment is able to increase the protection against third party attacks in secure boot.

Moreover, in the present embodiment, the trust list includes a firmware volume ("Firmware Volume") whose provider is the BIOS memory 22 in which BIOS programs are stored, or a network boot ("Https Boot") with a preset server device as a provider.

Thereby, the laptop PC 1 according to the present embodiment lists safely-bootable firmware volumes ("Firmware Volume") or network boots ("Https Boot") and determines that an unauthorized boot program has been executed (the non-trust state "1") due to any other execution (for example, booting from the USB or the like), thus making it easy to detect the execution of an unauthorized boot program that may have been tampered with.

In addition, the laptop PC 1 according to the present embodiment has a restriction list storage unit 42 (a usage restriction list storage unit) that stores a list of protocols whose usage is restricted. The restriction processing unit 113 restricts the use of protocols included in the list of protocols stored in the restriction list storage unit 42 in the case where the boot chain flag is information indicating that an unauthorized boot program has been executed (non-trust state "1").

This allows the laptop PC 1 according to the present embodiment to appropriately restrict protocols likely to compromise security by a simple method of a list of protocols whose usage is restricted (a usage restriction list). Thus, the laptop PC 1 according to the present embodiment is able to further increase the protection against third party attacks in secure boot.

Further, in the present embodiment, the list of protocols whose usage is restricted includes protocols related to network connection (for example, "WiFiConfigProtocol" or the like), or protocols related to TPM.

This allows the laptop PC 1 according to the present embodiment to appropriately restrict protocols that are likely to compromise security. Thus, the laptop PC 1 according to the present embodiment is able to further increase the protection against third party attacks in secure boot.

The control method according to the present embodiment, which is a control method for the laptop PC 1 having the authentication processing unit 111 and the chain flag storage unit 43 described above, includes a startup processing step and a restriction processing step. The authentication processing unit 111 confirms the validity of the boot program for booting the OS on the basis of a predetermined security key in the BIOS processing. The chain flag storage unit 43 stores a boot chain flag that indicates whether an unauthorized boot program that may have been tampered with has been executed, in cooperation with a trust list storage unit 41 that stores a trust list, which is a list of trustable providers of a boot program. In the startup processing step, the startup processing unit 112 changes the boot chain flag stored in the chain flag storage unit 43 to information indicating that the unauthorized boot program has been executed in the case of causing the execution of the boot program acquired from a provide not included in the trust list stored in the trust list storage unit 41. In the restriction processing step, the restriction processing unit 113 restricts the use of the preset security-related protocols in the case where the boot chain flag stored in the chain flag storage unit 43 is information indicating that the unauthorized startup program has been executed.

Thereby, the control method according to the present embodiment has the same effect as the above-mentioned laptop PC 1 and is able to increase the protection against third party attacks in secure boot.

The present invention is not limited to the above embodiments, but may be modified to the extent not to deviate from the gist of the present invention.

For example, in the above embodiment, the information processing apparatus is described as a laptop PC 1, but not limited thereto, and may be any other information processing apparatus, such as, for example, a tablet terminal device, a desktop PC, and the like.

In the above embodiments, the provider of the trust list is not limited to the example illustrated in FIG. 3, but may include providers of other devices.

Moreover, in the above embodiments, the protocol of the usage restriction list is not limited to the example illustrated in FIG. 4, but may include other protocols.

Each of the components of the laptop PC 1 described above has a computer system inside. A program for implementing the functions of each of the components of the laptop PC 1 described above may be recorded on a computer-readable recording medium, and by loading the program recorded in the recording medium into the computer system to execute the program, the processes of the respective components of the laptop PC 1 described above may be performed. Note that the above "loading the program recorded in the recording medium into the computer system to execute the program" includes installing the program in the computer system. The term "computer system" here includes hardware such as the operating system and peripheral devices.

Moreover, the "computer system" may also include a plurality of computer devices connected via a network including the Internet, WAN, LAN, dedicated lines, and other communication lines. Furthermore, "computer-readable recording medium" refers to a portable medium such as a flexible disk, a magneto-optical disk, a ROM, or a CD-ROM, as well as a storage device such as a hard disk built in a computer system or the like. Thus, the recording medium storing the program may be a non-transitory recording medium such as a CD-ROM.

Furthermore, a recording medium also includes an internal or external recording medium able to be accessed by a delivery server to deliver the program. The program may be divided into a plurality of programs, each of which is downloaded at a different timing and then merged with each of the components of the laptop PC 1, or the distribution server that delivers each of the divided programs may be different. Furthermore, the term "computer-readable recording medium" includes a recording medium that retains the program for a certain period of time, like a volatile memory (RAM) inside the computer system that serves as the server or client used when the program is transmitted via a network. The above programs may be used to implement some of the above-described functions. Moreover, the program may be a so-called difference file (difference program), which is able to implement the above-described functions in combination with the programs already recorded in the computer system.

In addition, some or all of the above-described functions may be implemented as integrated circuits such as large scale integration (LSI). Each of the above functions may be individually implemented as a processor, or the functions may be partially or fully integrated into a processor. The method of forming an integrated circuit is not limited to LSI, but may be implemented as a dedicated circuit or a general-purpose processor. In the case where an alternative integrated circuit technology to LSI emerges as a result of progress in semiconductor technology, an integrated circuit based on the technology may be used.

### Description of Symbols

- 1: laptop PC
- 2: boot server
- 10: main control unit
- 11: CPU
- 12: main memory
- 13: video subsystem
- 14: display unit
- 21: chipset
- 22: BIOS memory
- 23: SSD
- 24: audio system
- 25: WLAN card
- 26: USB connector
- 31: embedded controller (EC)
- 32: input unit
- 33: power circuit
- 40: storage unit
- 41: trust list storage unit
- 42: restriction list storage unit
- 43: chain flag storage unit
- 100: information processing system
- 110: BIOS processing unit
- 111: authentication processing unit
- 112: startup processing unit
- 113: restriction processing unit
- 120: OS processing unit
- 250: NW communication unit
- NW1: network

## Claims

1. An information processing apparatus comprising:
an authentication processing unit configured to confirm a validity of a startup program for booting an operating system, OS, based on a predetermined security key in basic input output system, BIOS, processing;
a trust list storage unit configured to store a trust list, the trust list comprising a list of trustable providers of the startup program;
a chain information storage unit configured to store chain information indicating whether the startup program has been executed when the startup program is unauthorized because of being possibly tampered with;
a startup processing unit configured to change the chain information stored in the chain information storage unit to information indicating that the unauthorized startup program has been executed when the startup program acquired from a provider not included in the trust list stored in the trust list storage unit has been executed in secure boot processing for executing the startup program whose validity has been confirmed by the authentication processing unit; and
a restriction processing unit configured to restrict the use of preset security-related protocols when the chain information stored in the chain information storage unit is information indicating that the unauthorized startup program has been executed.

2. The information processing apparatus according to claim 1, wherein the trust list includes a firmware volume with a BIOS memory as a provider, where programs for the BIOS are stored, or a network boot with a preset server device as a provider.

3. The information processing apparatus according to any one of claims 1 and 2, further comprising a usage restriction list storage unit configured to store a list of the protocols whose use is restricted,
wherein the restriction processing unit is configured to restrict the use of the protocols included in the list of the protocols stored in the usage restriction list storage unit when the chain information indicates that the unauthorized startup program has been executed.

4. The information processing apparatus according to claim 3, wherein the list of the protocols whose use is restricted includes protocols related to network connection or protocols related to a trusted platform module, TPM.

5. A control method for an information processing apparatus including: an authentication processing unit configured to confirm a validity of a startup program for booting an operating system, OS, based on a predetermined security key in basic input output system, BIOS, processing; a trust list storage unit configured to store a trust list, the trust list comprising a list of trustable providers of the startup program; and a chain information storage unit configured to store chain information indicating whether the startup program has been executed when the startup program is unauthorized because of being possibly tampered with;
the method comprising:
a startup processing step in which a startup processing unit changes the chain information stored in the chain information storage unit to information indicating that the unauthorized startup program has been executed when the startup program acquired from a provider not included in the trust list stored in the trust list storage unit has been executed in secure boot processing for executing the startup program whose validity has been confirmed by the authentication processing unit; and
a restriction processing step in which a restriction processing unit restricts the use of preset security-related protocols when the chain information stored in the chain information storage unit is information indicating that the unauthorized startup program has been executed.

6. The control method according to claim 5, wherein the trust list includes a firmware volume with a BIOS memory as a provider, where programs for the BIOS are stored, or a network boot with a preset server device as a provider.

7. The control method according to any one of claims 5 and 6, wherein the information processing apparatus further comprises a usage restriction list storage unit configured to store a list of the protocols whose use is restricted, the control method further comprising:
a step in which the usage restriction list storage unit restricts the use of the protocols included in the list of the protocols stored in the usage restriction list storage unit when the chain information indicates that the unauthorized startup program has been executed.

8. The control method according to claim 7, wherein the list of the protocols whose use is restricted includes protocols related to network connection or protocols related to a trusted platform module, TPM.

9. A program for causing a computer for an information processing apparatus including: an authentication processing unit configured to confirm a validity of a startup program for booting an operating system, OS, based on a predetermined security key in basic input output system, BIOS, processing; a trust list storage unit configured to store a trust list, the trust list comprising a list of trustable providers of the startup program; and a chain information storage unit configured to store chain information indicating whether the startup program has been executed when the startup program is unauthorized because of being possibly tampered with, the program causing the computer to execute:
a startup processing step in which the startup processing unit changes the chain information stored in the chain information storage unit to information indicating that the unauthorized startup program has been executed when the startup program acquired from a provider not included in the trust list stored in the trust list storage unit has been executed in secure boot processing for executing the startup program whose validity has been confirmed by the authentication processing unit; and
a restriction processing step of restricting the use of preset security-related protocols when the chain information stored in the chain information storage unit is information indicating that the unauthorized startup program has been executed.

10. The program according to claim 9, wherein the trust list includes a firmware volume with a BIOS memory as a provider, where programs for the BIOS are stored, or a network boot with a preset server device as a provider.

11. The program according to any one of claims 9 and 10, wherein the information processing apparatus further comprises a usage restriction list storage unit configured to store a list of the protocols whose use is restricted, the program further causing the computer to execute:
a step in which the usage restriction list storage unit restricts the use of the protocols included in the list of the protocols stored in the usage restriction list storage unit when the chain information indicates that the unauthorized startup program has been executed.

12. The program according to claim 11, wherein the list of the protocols whose use is restricted includes protocols related to network connection or protocols related to a trusted platform module, TPM.
